# NEUE EUROPÄISCHE PATENTSCHRIFT

(11) **EP 0 939 774 B2**
(45) Veröffentlichungstag und Bekanntmachung des Hinweises auf die Entscheidung über den Einspruch: **17.06.2009**
(45) Hinweis auf die Patenterteilung: 22.08.2001
(21) Anmeldenummer: 97953687.7
(22) Anmeldetag: 21.11.1997
(51) Int. Cl.: C08F 2/22

(54) **VERFAHREN ZUR HERSTELLUNG EINER POLYMERDISPERSION DURCH RADIKALISCHE WÄSSRIGE EMULSIONSPOLYMERISATION MIT EINER KONTINUIERLICH HERGESTELLTEN WÄSSRIGEN MONOMERENEMULSION**
METHOD FOR THE PRODUCTION OF A POLYMER DISPERSION BY RADICAL AQUEOUS EMULSION POLYMERIZATION WITH A CONTINUOUSLY PRODUCED AQUEOUS MONOMER EMULSION
PROCEDE DE PRODUCTION D'UNE DISPERSION POLYMERE PAR POLYMERISATION EN EMULSION AQUEUSE RADICALAIRE AU MOYEN D'UNE EMULSION DE MONOMERES AQUEUSE PRODUITE EN CONTINU

(30) Priorität: 25.11.1996 DE 19648744
(43) Veröffentlichungstag der Anmeldung: 08.09.1999
(73) Patentinhaber: BASF SE, 67056 Ludwigshafen (DE)
(72) Erfinder: KELLER, Andreas, D-67459 Böhl-Iggelheim (DE); LAWRENZ, Sven, D-68161 Mannheim (DE); BAUER, Gerhard, D-69469 Weinheim (DE); SCHMIDT-THÜMMES, Jürgen, D-67141 Neuhofen (DE); BÄCHER, Reinhard, D-67098 Bad Dürkheim (DE); HARTMANN, Jürgen, D-67227 Frankenthal (DE); TSCHANG, Chung-Ji, D-67098 Bad Dürkheim (DE)
(74) Vertreter: Kinzebach, Werner
(86) Internationale Anmeldenummer: PCT/EP1997/006511
(87) Internationale Veröffentlichungsnummer: WO 1998/023650

(56) Entgegenhaltungen:
- EP-A- 0 037 923
- EP-A- 0 443 609
- DE-A- 1 720 827
- DE-A- 2 930 160
- DE-B- 1 240 286
- JP-A- 03 043 402
- JP-A- 50 144 792
- JP-A- 57 192 403
- US-A- 3 296 168
- US-A- 3 637 563
- US-A- 4 713 434
- US-A- 5 250 576
- Römpp Chemie Lexikon, Stuttgart, New-York, Thieme Verlag, 9. Auflage, 1990, Band 2, Stichwort: "Emulsionen".
- H.-G. Elias "Makromeleküle", Basel, Heidelberg, New York, Hüthig und Wepf Verlag, 5. Auflage, 1992, Band 2, S. 93-101.
- A. Echte "Handbuch der Technischen Polymerchemie", Weinheim, VCH-Verlag, 1993, S. 316-322

## Beschreibung

Die vorliegende Erfindung betrifft ein Verfahren zur Herstellung einer Polymerdispersion durch radikalische Polymerisation einer wäßrigen Monomerenemulsion.

Allgemein unterscheidet man bei der Herstellung von Polymerdispersionen durch Emulsionspolymerisation Batch-, Semibatch- und kontinuierliche Verfahren, wobei verschiedene Methoden der Zugabe der Monomeren in den Reaktionsbehälter beschrieben werden.

In Kirk-Othmer, Encyclopedia of Chemical Technology, 3. Aufl., Bd. 1, S. 397 ff. ist ein Semibatch-Verfahren zur Emulsionspolymerisation am Beispiel der großtechnischen Polymerisation von Acrylestern beschrieben. Dabei wird eine in einem separaten Ansatzkessel hergestellte Monomerenemulsion kontinuierlich in den Polymerisationsreaktor gegeben, dort mit einer wäßrigen Initiatorlösung versetzt und polymerisiert.

In Kirk-Othmer, Encyclopedia of Chemical Technology, 3. Aufl., Bd. 14, S. 92 ff. findet sich eine vergleichende Übersicht von Batch-, Semibatch- und kontinuierlichen Verfahren bei der Emulsionspolymerisation. Nach einer allgemeinen Vorgehensweise für ein Semibatch-Verfahren kann der Emulsionszulauf alle für die Emulsionspolymerisation verwendeten Inhaltsstoffe, wie z.B. Monomere, oberflächenaktive Stoffe, Wasser und Regler, enthalten, wobei die Monomerenemulsion in einem separaten Ansatzkessel, dem sogenannten Feed-Tank, hergestellt wird. Der Initiator aber darf hierbei nicht in die Monomerenemulsion eingemischt werden, da dann eine Polymerisation im Feed-Tank erfolgen könnte.

In der Encyclopedia of Polymer Science and Engineering, Bd. 6, S. 10 ff. (1986), sind ebenfalls Batch-, Semibatch- und kontinuierliche Reaktoren für die Emulsionspolymerisation beschrieben. Wie schon zuvor wird als mögliche Variante des Batch- und Semibatch-Verfahrens die Herstellung einer Monomerenemulsion in einem separaten Ansatzkessel beschrieben, die alle Emulsionsbestandteile mit Ausnahme des Initiators enthalten kann. Dieser wird in einem separaten Feed direkt in den Polymerisationsreaktor gegeben. Bei den beschriebenen kontinuierlichen Verfahren werden die Monomeren, entweder ohne vorherige Emulgierung zusammen mit der wäßrigen Phase, oder in Form einer Monomerenemulsion, die separat auf Vorrat hergestellt wird, dem(den) Reaktor(en) kontinuierlich zugeführt.

Semibatch-Verfahren, bei denen ein kontinuierlicher Feed einem Rührreaktor zugeführt, während der Reaktion aber kein Produkt entnommen wird, sind gegenüber den Batch-Verfahren bevorzugt. So können die Zusammensetzung des Feed und die Erstbefüllung einfach variiert und somit eine Vielzahl verschiedener Dispersionen in ein und demselben Reaktor hergestellt werden. Neben diesen Vorzügen liegen weitere Vorteile des Semibatch-Verfahrens in ihrer erhöhten Sicherheit auf Grund der, im Vergleich zum Batch-Verfahren, jeweils nur geringen Monomermengen im Reaktor und einer besseren Abfuhr der Reaktionswärme, insbesondere bei Dispersionen, bei denen es während der Polymerisation zu einem starken Viskositätsanstieg kommt. Des weiteren ist die mögliche Regelung der Zulaufgeschwindigkeiten der Monomeren oder der Monomerenemulsion und somit eine verbesserte Reaktionskontrolle vorteilhaft.

Die Zuführung der Monomeren in den Polymerisationsreaktor kann beim Semibatch-Verfahren z.B. separat von der Zuführung des Initiators in reiner Form als einziger Zulauf erfolgen, wie z.B. in der EP-A-0 575 625 beschrieben. Weitere Verfahren zur Zugabe der Monomeren in den Polymerisationsreaktor sind, wie ebenfalls zuvor beschrieben, die gemeinsame Zugabe mit der wäßrigen Phase ohne vorherige Emulgierung und die Zugabe einer in einem separaten Ansatzkessel hergestellten Monomerenemulsion.

Dabei weisen Verfahren des Standes der Technik unter Zugabe der Monomeren in nicht emulgierter oder reiner Form die folgenden Nachteile auf:
a) Die zum Emulgieren der Monomeren erforderliche Energie muß vom Rührer des Polymerisationsreaktors aufgebracht werden. Dies erfordert entweder den Einsatz spezieller, teurer, teilweise komplizierter und schwer zu reinigender Rührer oder eine Erhöhung des Leistungseintrags in die Reaktionsmasse durch Erhöhung der Rührerdrehzahl oder Verwendung größerer Rührer. Letztere Maßnahmen führen zu einen erhöhten Scherbelastung der Dispersionen und somit zu einer vermehrten Koagulat-Bildung.
b) Bei einer unzureichenden Emulgierung im Reaktor kann es zur Ausbildung einer reinen Monomerphase im Reaktor kommen, d.h. das spezifisch leichtere, noch nicht abreagierte Monomer bildet eine zusammenhängende, auf der übrigen Reaktionsmasse aufschwimmende Schicht. Nach Beendigung des Emulsionszulaufs entfällt die Kühlwirkung der kalten Zuläufe und es kann zu einem starken Temperaturanstieg im Kesselinneren durch Abreagieren dieser konzentrierten Monomerenphase kommen. Zudem führt die Reaktion einer solchen konzentrierten Monomerenphase zu einer erhöhten Koagulatbildung und zu einer starken Reaktorverunreinigung.

Die EP-A-0037923 beschreibt ein Verfahren zur Herstellung von wäßrigen Polymerdispersionen mit einem Feststoffgehalt von bis zu 75 Gew.-%. Bei diesem Verfahren stellt man aus zwei allein mit sich nicht copolymerisierbaren Monomeren und einem weiteren, mit beiden Monomeren copolymerisierbaren Monomer unter Zusatz eines hohen Anteils Polymerisationsinhibitor eine Monomeremulsion her. Die erhaltene Monomeremulsion wird als Zulauf fur eine Polymerisation nach dem Zulaufverfahren verwendet.

Die US-A-3,637,563 beschreibt ein Verfahren zur Herstellung von Polymerdispersionen mit hohem Feststoffgehalt, wobei man Monomere und Emulgator in eine stabile Wasser-in-Öl-Emulsion mit einem Wassergehalt von etwa 10 Gew.-% überführt und die so hergestellte Monomeremulsion nach dem Zulaufverfahren durch Zugabe in wäßrige Initiatorlösunq polymerisiert.

Die dem Stand der Technik angehörenden zuvor beschriebenen Semibatch-Verfahren, bei denen eine Monomerenemulsion dem Polymerisationsreaktor kontinuierlich zugeführt wird, erfordern alle die Herstellung und Bereitstellung dieser Emulsion in einem separaten Kessel vor Reaktionsbeginn. Diese Verfahrensvariante weist jedoch die folgenden Nachteile auf:
a) Der Initiator kann nicht mit in die Monomerenemulsion eingemischt werden, da dann mit einer Polymerisation im Zulaufgefäß zu rechnen ist. Eine getrennte Initiatorzufuhr in den Reaktor bedingt jedoch eine lokal erhöhte Elektrolytkonzentration an der Einlaufstelle, was zu vermehrter unerwünschter Koagulatbildung führt.
b) Die für die wäßrige radikalische Emulsionspolymerisation verwendeten Emulsionen sind thermodynamisch nicht stabil, d.h. es kann zu einer Entmischung der Monomerenemulsion durch Koaleszenz der Monomertröpfchen und zur Ausbildung einer Monomerphase im Zulaufgefäß kommen. Dabei wird gleichzeitig Emulgator freigesetzt, der im Reaktor Mizellen bilden und somit das Wachstum einer weiteren unerwünschten Teilchengeneration initiieren kann. Zudem bedingt die Zufuhr einer gebildeten reinen Monomerphase am Ende des Zulaufs die zuvor beschriebenen Probleme durch starken Temperaturanstieg, erhöhte Koagulatbildung und Reaktorverunreinigung.
c) Bei der Herstellung höher konzentrierter Dispersionen muß die dem Polymerisationsreaktor zugeführte Monomerenemulsion einen hohen Monomergehalt aufweisen. Dies führt im allgemeinen zu Emulsionen mit einer hohen Viskosität und somit zu Problemen bei der Förderung dieser Emulsionen. Weiterhin neigen besonders hochkonzentrierte wäßrige Monomerenemulsionen zum Entmischen.

In keiner der zuvor genannten Schriften findet sich ein Hinweis auf die Verwendung einer kontinuierlich hergestellten wäßrigen Monomerenemulsion bei der radikalischen wäßrigen Emulsionspolymerisation zur Herstellung von Polymerdispersionen.

Die US-A-5,250,576 beschreibt ein kontinuierliches Verfahren zur Herstellung einer speziellen Wasser-in-Öl-Emulsion (high internal phase emulsion HIPE) mit einem hohen Anteil an disperser wäßriger Phase und ihre anschließende Polymerisation und Entwässerung zur Herstellung von Absorberschäumen. Das Verfahren umfaßt:
a) Herstellen einer Ölphase aus Monomeren, wie z.B. Styrol und p-Methylstyrol, Comonomeren, wie z.B. Alkylacrylate und -methacrylate, Butadien, etc., Vernetzer, und Emulgatoren;
b) Herstellen einer wäßrigen Phase aus einem wasserlöslichen Elektrolyt und einem wasserlöslichen Initiator;
c) Simultanes Einbringen von Öl- und Wasserphase in eine dynamische Mischzone;
d) Voremulgieren;
e) HIPE-Bildung in der dynamischen Mischzone durch Erhöhen der Flußrate der Wasserphase und/oder Absenken der Flußrate der Ölphase;
f) kontinuierliche Förderung aus der dynamischen in eine statische Mischzone, die von dem Gemisch durchflossen wird, wobei eine stabile Wasser-in-Öl-Emulsion entsteht;
g) Polymerisation und Entwässerung.

Im Gegensatz zur radikalischen wäßrigen Emulsionspolymerisation, bei der die Polymerisation in den Mizellen und nicht in den Monomertröpfchen (Ölphase) erfolgt, findet bei diesem Verfahren die Polymerisation in der Ölphase statt, so daß es als Spezialfall der Substanzpolymerisation aufzufassen ist. Das Verfahren zielt auch nicht auf die Herstellung einer stabilen wäßrigen Polymerdispersion, sondern dient zur Herstellung eines Polymerschaums, der zu einem Absorber entwässert werden kann. Dementsprechend spielen die zuvor beschriebenen, für die Herstellung wäßriger Polymerdispersionen spezifischen Probleme, wie z.B. die Koagulat-bildung, bei dem Verfahren der US-A-5,250,576 keine Rolle.

Der vorliegenden Erfindung liegt die Aufgabe zugrunde, ein Verfahren zur Herstellung von vorzugsweise hochkonzentrierten Polymerdispersionen durch radikalische Polymerisation einer wäßrigen Monomerenemulsion zur Verfügung zu stellen, wobei die zuvor beschriebenen Nachteile, insbesondere die vermehrte Koagulatbildung, die Verschmutzung des Polymerisationskessels sowie ein Temperaturanstieg kurz vor oder nach dem Ende der Monomerzugabe vermieden werden.

Überraschenderweise wurde nun gefunden, daß die Aufgabe durch ein Verfahren zur Herstellung einer wäßrigen Polymerdispersion gelöst wird, wobei dem Reaktionsgefäß eine nach Maßgabe ihres Verbrauchs kontinuierlich hergestellte wäßrige Monomerenemulsion zugeführt wird.

Gegenstand der Erfindung ist somit ein Verfahren zur Herstellung einer Polymerdispersion durch radikalische Polymerisation einer wäßrigen Monomerenemulsion, das dadurch gekennzeichnet ist, daß man die Monomerenemulsion nach Maßgabe des Verbrauchs kontinuierlich herstellt und die Emulsionspolymerisation der kontinuierlich hergestellten Monomerenemulsion in einem Semi-Batch-Verfahren erfolgt. Erfindungsgemäß werden die Komponenten der Monomerenemulsion dabei in mindestens einer Mischvorrichtung zur Emulsion vermischt, wobei als Mischvorrichtung mindestens ein Inline-Mischer verwendet wird, der unmittelbar vor dem Reaktionsgefäß angebracht ist.

Das erfindungsgemäße Verfahren eignet sich zur Herstellung von Homo- und Copolymerisaten, so daß zur kontinuierlichen Herstellung der Monomerenemulsion in der Mischvorrichtung dieser mindestens ein monomerhaltiger Zulauf zugeführt wird. Die Zuführung mehrerer Monomerer kann separat oder in Gemischen erfolgen, die z.B. durch Zusammenführen der Einzelzuläufe in einer gemeinsamen Rohrleitung erzeugt werden können.

Dabei können die Monomeren in reiner Form (Ölphase) oder zusammen mit Wasser der Mischvorrichtung zugeführt werden. Vorzugsweise wird wasserhaltigen Monomerzuläufen bereits vor Eintritt in die Mischvorrichtung zur Herstellung der Monomerenemulsion eine oberflächenaktive Substanz (Emulgator) zugesetzt.

Die Zugabe des Initiators erfolgt über einen separaten Zulauf, im allgemeinen in wäßriger Phase, wobei jedoch Monomerzulauf und Initiatorzulauf vor Eintritt in die Mischvorrichtung vereinigt werden können. Gewünschtenfalls kann der Initiator auch unabhängig von der Monomerenemulsion direkt in den Reaktor gegeben werden.

Die Zugabe der übrigen Komponenten der Monomerenemulsion, die im folgenden noch genauer definiert werden, erfolgt je nach Verträglichkeit gemeinsam mit einem der vorgenannten Zuläufe oder separat in reiner Form, als Lösung in Wasser oder einem geeigneten Lösungsmittel.

Vorzugsweise werden bei Ausführung des erfindungsgemäßen Semibatch-Verfahrens ein Teil der wäßrigen Phase sowie gegebenenfalls eines oder mehrere der Monomeren und/oder der übrigen Komponenten der Monomerenemulsion im Reaktor vorgelegt.

Die Zuführung der Komponenten in die Mischvorrichtung kann nach üblichen Verfahren erfolgen. Dazu zählt z.B. die direkte Zugabe aller Komponenten oder die Bildung geeigneter Vormischungen.

Nach einer geeigneten Ausführungsform des erfindungsgemäßen Verfahrens zur Herstellung von Copolymerisaten kann z.B. eine Mischung aus einem oder mehreren wasserlöslichen Monomeren, einem Emulgator und gegebenenfalls weiteren Additiven als erstem Zulauf mit einer wäßrigen Lösung eines Initiators als zweitem Zulauf zusammengeführt werden, z.B. in einem gemeinsamen Rohrleitungsstück. Zu dieser Mischung kann dann z.B. mindestens ein wasserunlösliches Monomer in reiner Form (Ölphase) als drittem Zulauf, gegebenenfalls über eine Dosiervorrichtung, gegeben werden. Die Mischung der drei Zuläufe wird in einer Mischvorrichtung, wie im folgenden ausführlich beschrieben, nach Maßgabe des Verbrauchs kontinuierlich emulgiert und direkt dem Reaktionsgefäß zugeführt.

Als Mischvorrichtung zur kontinuierlichen Herstellung der wäßrigen Monomerenemulsion können in dem erfindungsgemäßen Verfahren einer oder auch mehrere Mischer verwendet werden, wobei es sich um Mischer gleicher oder verschiedener Bauart handeln kann, die in beliebiger Reihenfolge, Anordnung und Kombination verwendet werden, wie z.B. Reihenanordnung aller Mischer, Kombination aus Parallel- und Reihenanordnung oder Parallelanordnung aller Mischer. Werden mehrere Mischer verwendet, so ist die Reihenanordnung bevorzugt.

Geeignete Mischer sind insbesondere dynamische Mischer, deren Mischorgane bewegliche Teile enthalten und statische Mischer, d.h. Mischorgane ohne bewegte Teile im Inneren, die nach dem Inline-Prinzip arbeiten.

Vorzugsweise sind die Mischer ausgewählt unter Rotor-Stator-Systemen, bevorzugt Kolloidmühlen oder Zahnkranzdispergiermaschinen, Ultraschallhomogenisatoren, Hochdruckhomogenisatoren, Rohrdurchlaufmischern, Strahldispergatoren, Scherspaltmischern, Wärmetauschern und gekrümmten rohrförmigen Durchflußreaktoren mit im wesentlichen kreisförmigen oder ellipsoidem Querschnitt.

Geeignete dynamische Inline-Mischer sind z.B. die in ZFL-Zeitschrift für Lebensmitteltechnologie und -Verfahrenstechnik (1982) 33(3), S. 139 ff. beschriebenen Kratzwärmetauscher, nach dem Rotor-Stator-Prinzip arbeitende Zerkleinerungsmaschinen wie z.B. Zahnkranzdispergiermaschinen, Kolloid- und Korundscheibenmühlen sowie Hochdruck- und Ultraschallhomogenisatoren.

Geeignete dynamische Inline-Mischer sind weiterhin Rohrdurchlaufmischer.

Geeignete statische Inline-Mischer sind z.B. die in ZFL-Zeitschrift für Lebensmitteltechnologie und -Verfahrenstechnik (1982) 33(3) S. 139 ff. beschrieben, wie z.B. Ross-ISG-Mischer, bei denen der Fluidstrom durch Einbauten mit Bohrungen geführt wird, die ihn in Teilströme zerlegen, die anschließend seitlich versetzt und in anderer Reihenfolge wieder zusammengeführt werden, oder statische Mischer, die mehrere gleichartige, feststehende Mischelemente umfassen, die - jeweils um 90° versetzt - hintereinander in ein Rohr oder einen Kanal eingebaut sind (z.B. Kenics-, Sulzer SMV- und Sulzer SMX-Mischer).

Weitere geeignete statische Inline-Mischer sind Scherspaltmischer, wie die in der EP-B-101 007 beschriebenen Strahldispergatoren.

Weitere geeignete Mischer sind auch Vorrichtungen zur Inline-Emulgierung, wie Membranen, Jet-Mischer und gekrümmte, rohrförmige Vorrichtungen mit im wesentlichen kreisförmigem oder ellipsoidem Querschnitt.

Es wird als Mischvorrichtung mindestens ein Inline-Mischer verwendet, der unmittelbar vor dem Reaktionsgefäß angebracht ist.

Insbesondere bevorzugt umfaßt die Mischvorrichtung einen dynamischen Mischer und/oder einen statischen Mischer. Werden zwei Mischer verwendet, so sind diese in Reihe geschaltet. Als dynamischer Mischer wird dabei vorzugsweise ein Rohrdurchlaufmischer oder eine Zahnkranzdispergiermaschine, z.B. vom Typ Megatron der Fa. Kinematica verwendet.

Vorzugsweise verwendet man als Mischvorrichtung einen Rohrdurchlaufmischer oder eine Zahnkranzdispergiermaschine, in Kombination mit einem statischen Mischer.

Mit Vorteil wird als Mischvorrichtung eine rohrförmige Vorrichtung mit mehreren aufeinanderfolgenden Krümmungen mit alternierenden Krümmungsrichtung verwendet. Solche Vorrichtungen sind in der deutschen Patentanmeldung DE 196 34 450 beschrieben.

Die Vorrichtung mit im wesentlichen kreisförmigem oder ellipsoidem Querschnitt weist mehrere, vorzugsweise unmittelbar aufeinanderfolgende, Krümmungen mit alternierender Krümmungsrichtung auf, wobei eine Umkehr der Krümmungsrichtung spätestens dann erfolgt, wenn die ab Beginn einer Krümmung durchlaufene Strecke des Schwerpunktes der Rohrquerschnittsfläche das 200fache des Rohrdurchmessers beträgt, wobei die Krümmung bis zu drei Umläufe um die Krümmungsachse umfassen kann.

Unter Rohrdurchmesser ist bei ellipsoidem Querschnitt der Vorrichtung der Mittelwert zwischen großer und kleiner Achse zu verstehen.

Vorzugsweise liegt bei ellipsoidem Querschnitt das Verhältnis von großer Halbachse zu kleiner Halbachse im Bereich von 5:1 bis 1:1.

Unter Krümmungen mit alternierender Krümmungsrichtung ist hier eine Abfolge von gekrümmten Rohrsegmenten zu verstehen, wobei das jeweils nächste Rohrsegment (Abschnitt des Rohres zwischen zwei aufeinanderfolgenden Krümmungsumkehrungen) in eine andere, vorzugsweise die entgegengesetzte Richtung des vorhergehenden führt, d.h. es erfolgt mit jedem gekrümmten Rohrsegment eine Änderung, vorzugsweise eine Umkehr der Krümmungsrichtung. Diese Ausgestaltung der Vorrichtung erlaubt die Anfertigung von Wicklungen mit einer räumlich besonders günstigen, d.h. kompakten, Anordnung, die für die industrielle Praxis besonders geeignet ist.

Vorzugsweise ist die Krümmung so ausgebildet, daß der Schwerpunkt der Rohrquerschnittsfläche pro Krümmung einen Halbkreis beschreibt.

Der Krümmungsradius der gekrümmten Rohrsegmente beträgt vorzugsweise das 0,5- bis 100-fache, vorzugsweise das 1 bis 80-, 2 bis 50- oder 2 bis 20-fache des Durchmessers der Rohrquerschnittsfläche.

Die Abmessungen der Vorrichtung sind im allgemeinen so, daß das Verhältnis von Länge zu Durchmesser im Bereich von 100:1 bis 1 000 000:1, vorzugsweise 1 000 : 1 bis 100 000 : 1 bzw. 50 000 : 1 liegt.

Gemäß einer bevorzugten Ausführungsform ist die Vorrichtung als, von der eintretenden Strömung her gesehen, aufsteigende und einlagige Wicklung um mindestens zwei Achsen ausgebildet. Die Achsen können einen Winkel zueinander bilden, vorzugsweise sind sie jedoch im wesentlichen parallel. Diese Achsen können bei nicht selbsttragender Wicklung vorzugsweise durch Rohre oder Stäbe, die rund oder eckig sein können, realisiert werden. Der Begriff "Wicklung um mindestens zwei Achsen" wird hier nur zur Veranschaulichung gebraucht. Es ist nicht erforderlich, daß die Achsen bei der Anwendung auch realisiert werden, z.B. in Form von Rohren oder Stäben.

Wenn man eine Wicklung um mehrere, bevorzugt in einer Ebene angeordnete Achsen vornimmt, resultiert eine bandartige bzw. wandartige Ausgestaltung.

Die erwähnten Wicklungen sind eine räumlich besonders günstige Anordnung und erlauben eine kompakte Ausführung der erfindungsgemäßen Vorrichtung. Sie sind leicht transportabel, was sich besonders bei Wartungsarbeiten als Vorteil erweist. Die Zahl der übereinander angeordneten Wicklungen ist beliebig, sie richtet sich nach den jeweiligen Anforderungen.

Für das erfindungsgemäße Verfahren geeignete wäßrige Monomerenemulsionen umfassen
a) wenigstens ein ethylenisch ungesättigtes Monomer,
b) gegebenenfalls wenigstens einen zur Initiierung wäßriger Emulsionspolymerisationen geeigneten Initiator,
c) eine oder mehrere grenzflächenaktive Substanzen,
d) gegebenenfalls weitere Additive.

### Komponente a)

Für das erfindungsgemäße Verfahren brauchbare Monomere sind Mono- oder Diester ethylenisch ungesättigter C₃-C₆-Mono- oder Dicarbonsäuren mit C₁-C₂₀-Alkanolen oder C₂-C₂₀-Diolen, Vinyl-C₁-C₂₀-alkylester, vinylaromatische Verbindungen, ethylenisch ungesättigte Nitrile, Vinylhalogenide, Vinyl-C₁-C₂₀-alkylether, C₂-C₈-Mono- und Diolefine, C₃-C₆-monoethylenisch ungesättigte Mono- oder Dicarbonsäuren, deren Salze oder deren Amide und N-Mono- oder N,N-Di-C₁-C₂₀-alkylamide oder Hydroxyalkylamide, N-Vinyllactame, ethylenisch ungesättigte Alkyl- oder Arylsulfonsäuren und/oder deren Salze, und Gemische verschiedener Monomere eines Typs und/oder verschiedener Typen.

Beispiele für geeignete Monomere sind C₁-C₁₂-Alkylacrylate und C₁-C₁₂-Alkylmethacrylate, wie die Ester der Acrylsäure oder Methacrylsäure mit Methanol, Ethanol, n-Propanol, Isopropanol, n-Butanol, Isobutanol, sec.-Butanol, tert.-Butanol, Pentanol, Hexanol, 2-Ethylhexanol, Octanol, Decanol, Dodecanol oder Stearylalkohol, Vinylformiat, Vinylacetat, Vinylpropionat, Styrol, α-Methylstyrol, Acrylnitril, Methacrylnitril, Acrylsäure, Methacrylsäure, Acrylamid, Methacrylamid, Vinylchlorid, Vinylidenchlorid, Vinylethylether, Ethylen, Propylen, Butadien, Isopren, N-Vinylpyrrolidon, Vinylsulfonsäure und deren Alkalisalze, Acrylamidopropansulfonsäure und deren Alkalisalze, sulfoniertes Styrol und dessen Alkalisalze, Acrylsäure, Methacrylsäure, Maleinsäure, Fumarsäure und Itaconsäure

Beispiele für weitere Monomere a), die allgemein in untergeordnetem Maße vorliegen, umfassen N-Alkyl- und N-Hydroxyalkylamide der zuvor genannten, ethylenisch ungesättigten Carbonsäuren, die Diester zweiwertiger Alkohole mit den zuvor genannten, ethylenisch ungesättigten Monocarbonsäuren, die Vinyl- oder Allylester der ethylenisch ungesättigten Carbonsäuren, N,N'-Divinyl- oder N,N'-Diallylharnstoffderivate oder Divinylaromaten.

Besonders geeignete Monomerkombinationen für das erfindungsgemäße Verfahren sind beispielsweise n-Butylacrylat mit Vinylacetat; n-Butylacrylat mit Styrol; n-Butylacrylat mit Ethylhexylacrylat; Butadien mit Styrol; Butadien mit Acrylnitril und/oder Methacrylnitril; Butadien und Isopren mit Acrylnitril und/oder Methacrylnitril; Butadien mit Acrylsäureestern; Butadien mit Methacrylsäureestern. Alle genannten Monomerkombinationen können darüber hinaus geringe Mengen weiterer Monomere, vorzugsweise Acrylsäure, Methacrylsäure, Acrylamid und/oder Methacrylamid enthalten.

### Komponente b)

Als radikalische Polymerisationsinitiatoren kommen alle diejenigen in Betracht, die in der Lage sind, eine radikalische wäßrige Emulsionspolymerisation auszulösen. Es kann sich dabei sowohl um Peroxide, z.B. Alkalimetallperoxodisulfate als auch um Azoverbindungen handeln. Es werden auch kombinierte Systeme verwendet, die aus wenigstens einem organischen Reduktionsmittel und wenigstens einem Peroxid und/oder Hydroperoxid zusammengesetzt sind, z.B. tert.-Butylhydroperoxid mit dem Natriumsalz der Hydroxymethansulfinsäure oder Wasserstoffperoxid mit Ascorbinsäure. Auch werden kombinierte System verwendet, die eine geringe Menge einer im Polymerisationsmedium löslichen Metallverbindung enthalten, deren metallische Komponente in mehreren Wertigkeitsstufen auftreten kann, z.B. Ascorbinsäure/Eisen(II)sulfat/Wasserstoffperoxid, wobei anstelle von Ascorbinsäure auch häufig das Natriumsalz der Hydroxymethansulfinsäure, Natriumsulfit, Natriumhydrogensulfit oder Natriumbisulfit und anstelle von Wasserstoffperoxid tert.- Butylhydroperoxid oder Alkaliperoxodisulfate und/oder Ammoniumperoxodisulfat verwendet werden. Bevorzugte Initiatoren sind die Ammonium- oder Alkalimetallsalze von Peroxosulfaten oder Peroxodisulfaten, insbesondere Natrium- oder Kaliumperoxodisulfat. Vorzugsweise beträgt die Menge der eingesetzten radikalischen Initiatorsysteme, bezogen auf die Gesamtmenge der zu polymerisierenden Monomeren, 0,1 bis 2 Gew.-%.

### Komponente c)

Die Emulsionspolymerisation wird in Gegenwart geeigneter Emulgatoren und Schutzkolloide durchgeführt. Diese Substanzen werden üblicherweise in Mengen bis zu 10 Gew.-%, vorzugsweise 0,5 bis 5 Gew.-% und insbesondere 0,5 bis 3 Gew.-%, bezogen auf die zu polymerisierenden Monomere, eingesetzt.

5 Geeignete Schutzkolloide sind beispielsweise Polyvinylalkohole, Cellulosederivate oder Copolymerisate auf Basis von Vinylpyrrolidon. Geeignete Emulgatoren sind insbesondere anionische und nicht-ionische Emulgatoren, wie ethoxylierte Mono-, Di- und Trialkylphenole, Ethoxylate langkettiger Alkanole, Alkali- und Ammoniumsalze von Alkylsulfaten, von Schwefelsäurehalbestern ethoxylierter Alkanole und ethoxylierter Alkylphenole, von Alkylsulfonsäuren und von Alkylarylsulfonsäuren. Eine ausführliche Beschreibung von Schutzkolloiden und Emulgatoren findet sich in Houben-Weyl, Methoden der Organischen Chemie, Band XIV/1, Makromolekulare Stoffe, Georg-Thieme-Verlag, Stuttgart, 1961, S. 192-208 und 411-420.

Brauchbare nicht-ionische Emulgatoren sind araliphatische oder aliphatische, nicht-ionische Emulgatoren, beispielsweise ethoxylierte Mono-, Di- und Trialkylphenole (EO-Grad: 3 bis 50, Alkylrest: C₄-C₁₀), Ethoxylate langkettiger Alkohole (EO-Grad: 3 bis 50, Alkylrest: C₈-C₃₆) sowie Polyethylenoxid/Polypropylenoxid-Blockcopolymere. Bevorzugt werden Ethoxylate langkettiger Alkanole (Alkylreste: C₁₀-C₂₂, mittlerer Ethoxylierungsgrad 10 bis 50) und darunter besonders bevorzugt solche mit einem linearen C₁₂-C₁₈-Alkylrest und einem mittleren Ethoxylierungsgrad von 10 bis 50 sowie ethoxylierte Monoalkylphenole.

Geeignete anionische Emulgatoren sind beispielsweise Alkali- und Ammoniumsalze von Alkylsulfaten (Alkylrest: C₈-C₁₂), von Schwefelsäurehalbestern ethoxylierter Alkanole (EO-Grad: 2 bis 50, Alkylrest: C₁₂-C₁₈) und ethoxylierter Alkylphenole (EO-Grad: 3 bis 50, Alkylrest: C₄-C₉), von Alkylsulfonsäuren (Alkylrest: C₁₂-C₁₈) und von Alkylarylsulfonsäuren (Alkylrest: C₉-C₁₈). Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208). Als anionische Emulgatoren sind ebenfalls Bis(phenylsulfonsäure)ether bzw. deren Alkali- oder Ammoniumsalze, die an einem oder beiden aromatischen Ringen eine C₄-C₂₄-Alkylgruppe tragen, geeignet. Diese Verbindungen sind allgemein bekannt, z.B. aus der US-A 4,269,749 und im Handel erhältlich, beispielsweise als Dowfax® 2A1 (Warenzeichen der Dow Chemical Company).

Geeignete kationische Emulgatoren sind vorzugsweise quartäre Ammoniumhalogenide, z.B. Trimethylcetylammoniumchlorid, Methyltrioctylammoniumchlorid, Benzyltriethylammoniumchlorid oder quartäre Verbindungen von N-C₆-C₂₀-Alkylpyridinen, N-C₆-C₂₀-Alkylmorpholinen oder N-C₆-C₂₀-Alkylimidazolen, z.B. N-Laurylpyridiniumchlorid.

### Komponente d)

Zur Kontrolle des Molekulargewichts können übliche Regler eingesetzt werden, beispielsweise Mercaptoverbindungen, wie Mercaptoethanol, Mercaptopropanol, Mercaptobutanol, Mercaptoessigsäure, Mercaptopropionsäure, Mercaptotrimethoxysilan, Butylmercaptan und t-Dodecylmercaptan. Geeignet sind auch organische Halogenverbindungen, wie Tetrachlorkohlenstoff oder Bromtrichlormethan. Weitere geeignete Additive sind z.B. den pH-Wert einstellende Mittel, Antioxidantien, Desodorantien, Biozide, Vernetzungsmittel, Farbstoffe und Pigmente.

Die erfindungsgemäß hergestellte Emulsion wird in einem dafür geeigneten Reaktor polymerisiert. Dazu zählen z.B. gerührte Reaktoren, Kesselkaskaden. Die Emulsionspolymerisation der kontinuierlich hergestellten Monomerenemulsionen erfolgt in einem Semibatch-Verfahren.

Im erfindungsgemäßen Semibatch-Verfahren kann die kontinuierliche Phase teilweise vorgelegt werden, d.h. der Reaktor wird anteilig mit Wasser und gegebenenfalls einer oberflächenaktiven Substanz und/oder einem Monomer befüllt.

Die Polymerisation kann auch unter Verwendung eines Saatlatex erfolgen, der zu Beginn der Reaktion im Reaktorgefäß hergestellt werden kann oder als Komponente den übrigen Komponenten der Monomerenemulsion vor Eintritt in die Mischvorrichtung zugegeben werden kann.

Das erfindungsgemäße Verfahren eignet sich besonders zur Herstellung von Polymerdispersionen mit einem hohen Feststoffgehalt. Bevorzugt liegt dieser im Bereich von 25 bis 75 Gew.-%, besonders bevorzugt bei mindestens 50 Gew.-% und insbesondere bevorzugt bei mindestens 60 Gew.-%. Dabei werden die aus dem Stand der Technik bekannten Nachteile, insbesondere infolge einer teilweisen oder vollständigen Entmischung von separat hergestellten (voremulgierten) Monomerenemulsionen, vermieden.

Die Erfindung wird anhand der folgenden nicht einschränkenden Beispiele erläutert.

### Beispiele

Um die Vorteile einer Polymerisation mit kontinuierlicher Emulsionsherstellung nach Maßgabe des Verbrauchs im Vergleich zum Zulauf reiner Monomerer bzw. im Vergleich zum Zulauf einer in einem Ansatzkessel separat hergestellten Emulsion zu belegen, wurden die vier folgenden Dispersionen jeweils mit den 3 folgenden Dosierverfahren hergestellt:

### Dosierverfahren 1 (Vergleich)

Die jeweils separat vorgemischten Zuläufe 1A und 1B wurden über eine gemeinsame Zulaufleitung - jedoch ohne vorherige Emulgierung - in einen Rührkessel (Polymerisationskessel) dosiert.

### Dosierverfahren 2 (Vergleich)

Die Zuläufe 1A und 1B wurden in einem Ansatzkessel emulgiert, und von dort aus in den Rührkessel dosiert. Der Zulauf 2 wurde über eine separate Zulaufleitung in den Rührkessel dosiert.

### Dosierverfahren 3 (erfindungsgemäß)

Zulauf 1A und 2 wurden in einem Rohrleitungsstück zusammengeführt. Dieser Mischung aus Zulauf 1A und 2 wurde nun der Zulauf 1B zudosiert. Die Mischung aus Zulauf 1A, 1B und 2 wurde nun mit Hilfe eines Inline-Mischelements (a oder b), welches unmittelbar vor dem Rührkessel in der Zulaufleitung angebracht war, emulgiert, und gelangte anschließend in den Rührkessel.

Als Inline-Mischelemente wurden:
a) ein statischer Mischer vom Typ SMX-S, DN 3,2, bestehend aus 10 Mischelementen der Firma Sulzer Chemtech,
b) eine Zahnkranzdispergiermaschine Megatron MT 5000 der Fa. Kinematica verwendet.

Dispersion 1:

In einem Rührkessel wurden 13 kg Wasser vorgelegt und auf 90°C erhitzt. Anschließend wurden 5% des Zulaufs 1 und 9% des Zulaufs 2 zugegeben und 5 min anpolymerisiert. Danach wurden die Restmengen Zulauf 1A und B sowie Zulauf 2 unter Aufrechterhaltung der Polymerisationstemperatur innerhalb von 3 h nach jeweils einem der oben beschriebenen Dosierverfahren zudosiert. Im Anschluß daran wurde zur Vervollständigung des Umsatzes 1 h nachpolymerisiert.

### Zulauf 1:

- A:: 24,94 kg Wasser
4,33 kg Emulgator I
1,25 kg Acrylsäure
1,50 kg 50 gew.-%ige wäßrige Lösung von Acrylamid
- B:: 25,00 kg n-Butylacrylat
23,00 kg Vinylacetat

### Zulauf 2:

Lösung aus:
0,375 kg Natriumperoxodisulfat
4,98 kg Wasser

Feststoffgehalt: 52,0%

### Dispersion 2:

In einem Rührkessel wurden 15 kg Wasser vorgelegt und auf 85°C erhitzt. Anschließend wurden 6% des Zulaufs 1 und 10% des Zulaufs 2 zugegeben und 10 min anpolymerisiert. Danach wurden die Restmengen Zulauf 1A und B sowie Zulauf 2 unter Aufrechterhaltung der Polymerisationstemperatur innerhalb von 3,5 h nach jeweils einem der oben beschriebenen Dosierverfahren zudosiert. Im Anschluß daran wurde zur Vervollständigung des Umsatzes 1 h nachpolymerisiert.

### Zulauf 1:

- A:: 19,01 kg Wasser 2,00 kg Emulgator II
- B:: 30,00 kg n-Butylacrylat 20,00 kg Styrol

### Zulauf 2:

Lösung aus:
0,30 kg Natriumperoxodisulfat
4,70 kg Wasser

Feststoffgehalt: 55,6%

### Dispersion 3:

In einem Rührkessel wurden 4,33 kg Wasser vorgelegt und auf 85°C erhitzt. Anschließend wurden 5% des Zulaufs 1 und 8% des Zulaufs 2 zugegeben und 5 min anpolymerisiert. Danach wurden die Restmengen Zulauf 1A und B sowie Zulauf 2 unter Aufrechterhaltung der Polymerisationstemperatur innerhalb von 3,5 h nach jeweils einem der oben beschriebenen Dosierverfahren zudosiert. Im Anschluß daran wurde zur Vervollständigung des Umsatzes 1 h nachpolymerisiert.

### Zulauf 1:

- A:: 10,25 kg Wasser
1,33 kg Emulgator II
1,50 kg Emulgator III
1,00 kg Acrylsäure
1 ,40 kg 25 gew.-%ige wäßrige Lösung von Natriumhydroxid
- B:: 15,00 kg Ethylhexylacrylat
34,00 kg n-Butylacrylat

### Zulauf 2:

Lösung aus:
0,35 kg Natriumperoxodisulfat
5,48 kg Wasser

Feststoffgehalt: 68,6%

### Dispersion 4:

In einem druckfesten Rührkessel wurde eine Mischung aus 16,7 kg Wasser und 0,3 kg Itaconsäure vorgelegt und auf 85°C erhitzt. Anschließend wurden 4,8% des Zulaufs 1 und 9% des Zulaufs 2 zugegeben und 10 min anpolymerisiert. Danach wurden die Restmengen Zulauf 1A und B sowie Zulauf 2 unter Aufrechterhaltung der Polymerisationstemperatur innerhalb von 4,5 h nach jeweils einem der oben beschriebenen Dosierverfahren zudosiert. Im Anschluß daran wurde zur Vervollständigung des Umsatzes 1,5 h nachpolymerisiert.

### Zulauf 1:

- A:: 19,21 kg Wasser
3,00 kg Emulgator II
0,69 kg Acrylsäure
0,40 kg 25 gew.-%ige wäßrige Lösung von Natriumhydroxid
- B:: 31,00 kg Styrol
18,00 kg Butadien
0,44 kg tert.-Dodecylmercaptan

### Zulauf 2:

Lösung aus:
0,35 kg Natriumperoxodisulfat
5,50 kg Wasser

Feststoffgehalt: 53,7%

Als Emulgatoren wurden hierbei verwendet:
- Emulgator I:: 30 gew.-%ige wäßrige Lösung des Schwefelsäurehalbesters von ethoxyliertem Isononylphenol, EO-Grad:25
- Emulgator II:: 15 gew.-%ige wäßrige Lösung von Natriumlaurylsulfat
- Emulgator III:: 20 gew.-%ige wäßrige Lösung von ethoxyliertem Isooctylphenol, EO-Grad: 25

Im Anschluß an die Herstellung der Dispersionen wurden:
- der Gehalt an Koagulat > 50 µm
- die Verschmutzung des Polymerisationskessels
- der Anstieg der Kesselinnentemperatur nach Zulaufende nach den folgenden Methoden untersucht:

### Koagulat

1 kg der entsprechenden Dispersion wurden über ein Stück Nylonnetz bekannten Gewichts und einer Maschenweite von 50 µm filtriert. Das aufgefangene Koagulat wurde gründlich mit destilliertem Wasser gespült und zusammen mit dem Nylonnetz bei Raumtemperatur getrocknet. Durch Zurückwiegen wurde das Gewicht des aufgefangenen Koagulats bestimmt. Die Angaben der Koagulatmenge erfolgen in Prozent (bezogen auf die Masse der Dispersion).

### Verschmutzung des Polymerisationskessels

Nach Ablassen der Dispersion aus dem Rührkessel wurde dieser mit Wasser ausgespült, die Verschmutzung von Kesselwand und Rührer visuell begutachtet und nach den folgenden Kriterien bewertet:
1 sehr wenig Verschmutzung von Rührer und/oder Kesselwandung
2 leichte Verschmutzung von Rührer und/oder Kesselwandung
3 mäßige Verschmutzung von Rührer und/Oder Kesselwandung
4 starke Verschmutzung von Rührer und/oder Kesselwandung

### Temperaturanstieg nach Zulaufende

Hierzu wurde die Temperatur, die unmittelbar bei Zulaufende im Rührkessel herrschte mit der maximalen, nach Zulaufende erreichten Temperatur verglichen. Die dabei ermittelten Differenzen ΔT werden jeweils in °C angegeben.

Die Ergebnisse der Versuche sind in den folgenden Tabellen 1 bis 4 zusammengefaßt.

**Tabelle 1:**

| Ergebnisse der Versuche für Dispersion 1 | | | | |
|---|---|---|---|---|
| Dispersion 1 | Dosierverfahren 1 | Dosierverfahren 2 | Dosierverfahren 3a) | Dosierverfahren 3b) |
| Koagulat | 0,14% | 0,09% | < 0,01% | < 0,01% |
| ΔT nach Zulaufende | 8°C | 4°C | -- | -- |
| Kesselverschmutzung | 4 | 2 | 1 | 1 |

**Tabelle 2:**

| Ergebnisse der Versuche für Dispersion 2 | | | | |
|---|---|---|---|---|
| Dispersion 2 | Dosierverfahren 1 | Dosierverfahren 2 | Dosierverfahren 3a) | Dosierverfahren 3b) |
| Koagulat | 0,2% | 0,11% | 0,02% | < 0,01% |
| ΔT nach Zulaufende | 8°C | 7°C | ca. 1°C | -- |
| Kesselverschmutzung | 3 | 2 | 1 | 1 |

**Tabelle 3:**

| Ergebnisse der Versuche für Dispersion 3 | | | | |
|---|---|---|---|---|
| Dispersion 3 | Dosierverfahren 1 | Dosierverfahren 2 | Dosierverfahren 3a) | Dosierverfahren 3b) |
| Koagulat | 0,15% | 0,1% | 0,02% | 0,01% |
| ΔT nach Zulaufende | 10°C | 7°C | 2°C | -- |
| Kesselverschmutzung | 4 | 3 | 2 | 1 |

**Tabelle 4:**

| Ergebnisse der Versuche für Dispersion 4 | | | | |
|---|---|---|---|---|
| Dispersion 4 | Dosierverfahren 1 | Dosierverfahren 2 | Dosierverfahren 3a) | Dosierverfahren 3b) |
| Koagulat | 0,12% | 0,08% | < 0,01% | < 0,01% |
| ΔT nach Zulaufende | 8°C | 6°C | -- | -- |
| Kesselverschmutzung | 3 | 2 | 1 | 1 |

Wie die Ergebnisse der Tabellen 1 bis 4 zeigen, wird durch kontinuierliche Herstellung und Zugabe der Monomerenemulsion bei der Herstellung von Polymerdispersionen die Koagulatbildung verringert, die Temperaturerhöhung nach Zulaufende vermieden und die Kesselverschmutzung reduziert. Somit ist das erfindungsgemäße Verfahren den bisher bekannten überlegen.

## Patentansprüche

1. Verfahren zur Herstellung einer Polymerdispersion durch radikalische Polymerisation einer wässrigen Monomerenemulsion, wobei man die Monomerenemulsion nach Maßgabe des Verbrauchs kontinuierlich herstellt und man die Komponenten der Monomerenemulsion in mindestens einer Mischvorrichtung zur Emulsion vermischt, wobei als Mischvorrichtung mindestens ein Inline-Mischer verwendet wird, der unmittelbar vor dem Reaktionsgefäß angebracht ist, und die Emulsionspolymerisation der kontinuierlich hergestellten Monomerenemulsion in einem Semi-Batch-Verfahren erfolgt.

2. Verfahren nach Anspruch 1, **dadurch gekennzeichnet, dass** man als Mischvorrichtung mindestens einen dynamischen und/oder statischen Mischer verwendet.

3. Verfahren nach Anspruch 1 oder 2, **dadurch gekennzeichnet, dass** die Mischer ausgewählt sind unter Rotor-Stator-Systemen, bevorzugt Kolloidmühlen oder Zahnkranzdispergiermaschinen, Ultraschallhomogenisatoren, Hochdruckhomogenisatoren, Rohrdurchlaufrnischern, Strahldispergatoren, Scherspaltmischem, Wärmetauschern und gekrümmten rohrförmigen Durchflussreaktoren mit im Wesentlichen kreisförmigen oder ellipsoidem Querschnitt.

4. Verfahren nach einem der vorhergehenden Ansprüche, **dadurch gekennzeichnet, dass** man als Mischvorrichtung einen Inline-Mischer, insbesondere einen Rohrdurchlaufmischer oder eine Zahnkranzdispergiermaschine, in Kombination mit einem statischen Mischer verwendet.

5. Verfahren nach Anspruch 1 oder 2, **dadurch gekennzeichnet, dass** man als Mischvorrichtung eine gekrümmte rohrförmige Vorrichtung mit im wesentlichen kreisförmigem oder ellipsoidem Querschnitt verwendet, die mehrere Krümmungen mit alternierender Krümmungsrichtung aufweist, wobei eine Änderung der Krümmungsrichtung spätestens dann erfolgt, wenn die ab Beginn einer Krümmung durchlaufene Strecke des Schwerpunktes der Rohrquerschnittsfläche das 200-fache des Rohrdurchmessers beträgt, wobei eine Krümmung bis zu drei Umläufe um die Krümmungsachse umfassen kann.

6. Verfahren nach Anspruch 5, **dadurch gekennzeichnet, dass** die Krümmung so ausgebildet ist, dass der Schwerpunkt der Rohrquerschnittsfläche pro Krümmung einen Halbkreis beschreibt

7. Verfahren nach Anspruch 5 oder 6, **dadurch gekennzeichnet, dass** bei ellipsoidem Querschnitt das Verhältnis von großer Halbachse zu kleiner Halbachse im Bereich von 5:1 bis 1:1 liegt.

8. Verfahren nach einem der Ansprüche 5 bis 7, **dadurch gekennzeichnet, dass** die Vorrichtung als Wicklung um mindestens 2, bevorzugt in einer Ebene angeordnete, im Wesentlichen parallele Achsen, ausgebildet ist.

9. Verfahren nach einem der Ansprüche 5 bis 8, **dadurch gekennzeichnet, dass** die Komponenten der Monomerenemulsion an einer oder verschiedenen Stellen entlang der Vorrichtung zugeführt werden.

10. Verfahren nach einem der vorhergehenden Ansprüche, **dadurch gekennzeichnet, dass** die wässrige Monomerenemulsion
a) wenigstens ein ethylenisch ungesättigtes Monomer,
b) gegebenenfalls wenigstens einen zur Initiierung wässriger Emulsionspolymerisationen geeigneten Initiator,
c) eine oder mehrere grenzflächenaktive Substanzen,
d) gegebenenfalls weitere Additive
umfasst.

11. Verfahren nach Anspruch 10, **dadurch gekennzeichnet, dass** die ethylenisch ungesättigten Monomere ausgewählt sind unter Estern ethylenisch ungesättigter C₃-C₆-Mono- oder Dicarbonsäuren mit C₁-C₂₀-Alkanolen oder C₂-C₂₀-Diolen, bevorzugt Alkylacrylaten und Alkylmethacrylaten, Vinylestern von C₁-C₂₀-Monocarbonsäuren, Vinylaromaten, ethylenisch ungesättigten Nitrilen, Vinylhalogeniden, C₁-C₂₀-Alkylvinylethern, aliphatischen Kohlenwasserstoffen mit 2 bis 8 Kohlenstoffatomen und 1 oder 2 Doppelbindungen, ethylenisch ungesättigten C₃-C₆-Mono- oder Dicarbonsäuren und deren Amiden, N-Vinyllactamen, ethylenisch ungesättigten Alkyl- oder Arylsulfonsäuren, und deren Mischungen und/oder gegebenenfalls weiteren ethylenisch ungesättigten Monomeren.

12. Verfahren nach einem der Ansprüche 10 oder 11, **dadurch gekennzeichnet, dass** die Monomere ausgewählt sind unter C₁-C₁₂-Alkylacrylaten, C₁-C₁₂-Alkylmethacylaten, Vinylformiat, Vinylacetat, Vinylpropionat, Styrol, α-Methylstyrol, Acrylnitril. Methacrylnitril, Acrylsäure, Methacrylsäure, Acrylamid, Methacrylamid, Vinylchlorid, Vinylethylether, Ethylen, Propylen, Butadien, Isopren und N-Vinylpyrrolidon.

## Claims

1. A process for the preparation of a polymer dispersion by free radical polymerization of an aqueous monomer emulsion, wherein the monomer emulsion is prepared continuously at the rate at which it is consumed and the components of the monomer emulsion are mixed in at least one mixing apparatus to give the emulsion, wherein the mixing apparatus used comprises at least one inline mixer which is mounted immediately before the reaction vessel, and the emulsion polymerization of the continuously prepared monomer emulsion is carried out in a semibatch process.

2. A process as claimed in claim 1, wherein at least one dynamic or static mixture is used as the mixing apparatus.

3. A process as claimed in claim 1 or 2, wherein the mixers are selected from rotor-stator systems, preferably colloid mills or toothed-wheel dispersers, ultrasonic homogenizers, high-pressure homogenizers, continuous tube mixers, jet dispersers, shear gap mixers, heat exchangers and curved tubular flow-through reactors having essentially circular or ellipsoidal cross-section.

4. A process as claimed in any of the preceding claims, wherein an inline mixer, in particular a continuous tube mixer or a toothed-wheel disperser, in combination with a static mixer, is used as the mixing apparatus.

5. A process as claimed in claim 1 or 2, wherein the mixing apparatus used is a curved tubular apparatus which has an essentially circular or ellipsoidal cross-section and comprises a plurality of curves with alternating direction of curvature, a change in the direction of curvature occurring at the latest when that section of the center of gravity of the tube cross-sectional area flowed through from the beginning of a curve is 200 times the tube diameter, and it being possible for a curve to comprise up to three revolutions about the axis of curvature.

6. A process as claimed in claim 5, wherein the curve is formed in such a way that the center of gravity of the tube cross-sectional area describes a semicircle per curve.

7. A process as claimed in either of claims 5 and 6, wherein, in the case of an ellipsoidal cross-section, the ratio of semimajor axis to semiminor axis is from 5:1 to 1:1.

8. A process as claimed in any of claims 5 to 7, wherein the apparatus is in the form of a winding about at least 2, essentially parallel axes preferably arranged in a plane.

9. A process as claimed in any of claims 5 to 8, wherein the components of the monomer emulsion are fed in at one point or at different points along the apparatus.

10. A process as claimed in any of the preceding claims, wherein the aqueous monomer emulsion comprises
a) at least one ethylenically unsaturated monomer,
b) if appropriate, at least one initiator suitable for initiating aqueous emulsion polymerizations,
c) one or more surfactants and,
d) if appropriate, further additives.

11. A process as claimed in claim 10, wherein the ethylenically unsaturated monomers are selected from esters of ethylenically unsaturated C₃-C₆-mono- or dicarboxylic acids with C₁-C₂₀-alkanols, preferably alkyl acrylates and alkyl methacrylates, vinyl esters of C₁-C₂₀-monocarboxylic acids, vinylaromatics, ethylenically unsaturated nitriles, vinyl halides, C₁-C₂₀-alkyl vinyl ethers, aliphatic hydrocarbons having 2 to 8 carbon atoms and 1 or 2 double bonds, ethylenically unsaturated C₃-C₆-mono- or dicarboxylic acids and amides thereof, N-vinyllactams, ethylenically unsaturated alkanesulfonic or arylsulfonic acids and mixtures thereof or, if required, further ethylenically unsaturated monomers.

12. A process as claimed in either of claims 10 and 11, wherein the monomers are selected from C₁-C₁₂-alkyl acrylates, C₁-C₁₂-alkyl methacrylates, vinyl formate, vinyl acetate, vinyl propionate, styrene, a-methylstyrene, acrylonitrile, methacrylonitrile, acrylic acid, methacrylic acid, acrylamide, methacrylamide, vinyl chloride, vinyl ethyl ether, ethylene, propylene, butadiene, isoprene and N-vinylpyrrolidone.

## Revendications

1. Procédé de fabrication d'une dispersion de polymères au moyen d'une polymérisation par voie radicalaire d'une émulsion aqueuse de monomères, dans lequel l'on fabrique l'émulsion de monomères selon une alimentation en continu et l'on mélange les composants de l'émulsion de monomères dans au moins un dispositif mélangeur pour obtenir l'émulsion, dans lequel l'on emploie en tant que dispositif mélangeur au moins un mélangeur de type en ligne, que l'on installe directement avant le réacteur, et la polymérisation en emulsion de l'émulsion de monomères fabriquée en continu s'effectue dans un procédé semi-continu.

2. Procédé selon la revendication 1, **caractérisé en ce que** l'on emploie en tant que dispositif mélangeur au moins un mélangeur dynamique et/ou statique.

3. Procédé selon la revendication 1 ou 2, **caractérisé en ce que** les mélangeurs sont choisis parmi les systèmes rotor-stator, de préférence les broyeurs à colloïdes ou les disperseurs à couronne dentée, les homogénéisateurs à ultrasons, les homogénéisateurs à haute pression, les mélangeurs à passage tubulaire, les appareils à dispersion par injection, les mélangeurs de cisaillement à fente, les échangeurs de chaleur et les réacteurs tubulaires courbes à courant continu ayant essentiellement une section droite en forme de cercle ou d'ellipsoïde.

4. Procédé selon l'une quelconque des revendications précédentes, **caractérisé en ce que** l'on emploie en tant que dispositif mélangeur un mélangeur de type en ligne, en particulier un mélangeur à passage tubulaire ou un disperseur à couronne dentée, conjointement avec un mélangeur statique.

5. Procédé selon la revendication 1 ou 2, **caractérisé en ce que** l'on emploie en tant que dispositif mélangeur un dispositif tubulaire courbe ayant essentiellement une section droite en forme de cercle ou d'ellipsoïde et présentant plusieurs courbures avec des directions alternées de courbure, qui changent de direction de courbure au plus tard à l'endroit où la distance parcourue par le barycentre de la superficie de la section droite du tube à partir du début d'une courbure atteint 200 fois le diamètre du tube, à savoir qu'une courbure peut comprendre jusqu'à trois tours autour de l'axe de courbure.

6. Procédé selon la revendication 5, **caractérisé en ce que** la courbure est formée de telle sorte que le barycentre de la superficie de la section droite du tube parcourt un demi-cercle par courbure.

7. Procédé selon la revendication 5 ou 6, **caractérisé en ce que** pour une section droite en forme d'ellipsoïde, le rapport du demi grand-axe au demi petit-axe est dans la gamme de 5:1 à 1:1.

8. Procédé selon une des revendications 5 à 7, **caractérisé en ce que** le dispositif est construit sous forme d'enroulement autour d'au moins 2 axes qui sont de préférence situés dans le même plan et essentiellement parallèles.

9. Procédé selon une des revendications 5 à 8, **caractérisé en ce que** les composants de l'émulsion de monomères sont introduits au niveau d'un ou plusieurs endroits le long du dispositif.

10. Procédé selon une des revendications précédentes, **caractérisé en ce que** l'émulsion aqueuse de monomères comprend
a) au moins un monomère à insaturation éthylénique,
b) éventuellement au moins un amorceur approprié pour amorcer la polymérisation en émulsion aqueuse,
c) un ou plusieurs tensio-actifs,
d) éventuellement d'autres additifs.

11. Procédé selon la revendication 10, **caractérisé en ce que** l'on choisit les monomères à insaturation éthylénique parmi les esters des acides monocarboxyliques ou dicarboxyliques en C₃ à C₆ à insaturation éthylénique avec les alcanols en C₁ à C₂₀ ou les diols en C₂ à C₂₀, de préférence les acrylates d'alkyle et les méthacrylates d'alkyle, les esters vinyliques des acides monocarboxyliques en C₁ à C₂₀, les composés vinylaromatiques, les nitriles à insaturation éthylénique, les halogénures de vinyle, les éthers alkylvinyliques en C₁ à C₂₀, les hydrocarbures aliphatiques ayant 2 à 8 atomes de carbone et 1 ou 2 doubles liaisons, les acides monocarboxyliques ou dicarboxyliques en C₃ à C₆ à insaturation éthylénique et leurs amides, les N-vinylelactames, les acides alkylsulfoniques ou aryl-sulfoniques à insaturation éthylénique, et leurs mélanges et/ou éventuellement d'autres monomères à insaturation éthylénique.

12. Procédé selon une des revendications 10 ou 11, **caractérisé en ce que** l'on choisit les monomères parmi les acrylates d'alkyle en C₁ à C₁₂, les méthacrylates d'alkyle en C₁ à C₁₂, le formiate de vinyle, l'acétate de vinyle, le propionate de vinyle, le styrène, le α-méthylstyrène, l'acrylonitrile, le méthacrylonitrile, l'acide acrylique, l'acide méthacrylique, l'acrylamide, le méthacrylamide, le chlorure de vinyle, l'éther éthylique de vinyle, l'éthylène, le propylène, le butadiène, l'isoprène et la N-vinylpyrrolidone.
